# EUROPÄISCHE PATENTSCHRIFT

(11) **EP 1 010 579 B1**
(45) Veröffentlichungstag und Bekanntmachung des Hinweises auf die Patenterteilung: **03.05.2006**
(21) Anmeldenummer: 99123267.9
(22) Anmeldetag: 29.11.1999
(51) Int. Cl.: B60Q 3/04

(54) **Anzeigeeinheit**
Display unit
Unité d'affichage

(30) Priorität: 15.12.1998 DE 19857862
(43) Veröffentlichungstag der Anmeldung: 21.06.2000
(73) Patentinhaber: SIEMENS AKTIENGESELLSCHAFT, 80333 München (DE)
(72) Erfinder: Noll, Heinrich, Dr., 64823 Gross-Umstadt (DE)

(56) Entgegenhaltungen:
- EP-A- 0 111 622
- EP-A- 0 498 451
- EP-A- 0 732 679
- GB-A- 2 324 599
- JP-A- 7 280 596
- JP-A- 9 015 005
- JP-A- 9 152 360
- JP-A- 9 264 764
- JP-A- 10 054 902
- JP-A- 10 055 148
- PATENT ABSTRACTS OF JAPAN vol. 1998, no. 13, 30. November 1998 (1998-11-30) & JP 10 214036 A (DENSO CORP), 11. August 1998 (1998-08-11)

## Beschreibung

Die Erfindung betrifft eine Anzeigeeinheit, insbesondere für ein Kraftfahrzeug, mit einer in einen Lichtleiter einstrahlenden Lichtquelle, insbesondere zur rückwärtigen Beleuchtung eines lichtdurchlässigen Zifferblattes.

Anzeigeeinheiten der vorstehenden Art werden beispielsweise als Tachometer oder Drehzahlmesser in heutigen Kraftfahrzeugen eingesetzt und sind allgemein bekannt. Das Zifferblatt einer solchen Anzeigeeinheit hat Markierungen in Form von Zahlen, Symbolen oder Skalenstrichen, die sich in ihrer Lichtdurchlässigkeit oder ihrer Färbung von den übrigen Bereichen abheben. Dieses Zifferblatt besteht beispielsweise aus einer farbigen, überwiegend lichtdurchlässigen Folie, die auf dem Lichtleiter aufgebracht ist. Hinter dem Lichtleiter ist eine Lampe als Lichtquelle angeordnet. Mit der Lampe wird Licht in den Lichtleiter eingekoppelt, welches durch das Zifferblatt zu einem Betrachter gelangt.

Nachteilig bei einer solchen Anzeigeeinheit ist, dass die der Lichtquelle benachbarten Bereiche des Zifferblattes stärker durchleuchtet werden als weiter von ihr entfernte Bereiche. Dadurch erfolgt die Durchleuchtung des Zifferblattes ungleichmäßig, so dass beispielsweise die Lichtquelle für einen Betrachter als heller Fleck durch das Zifferblatt hindurch erkennbar ist und so die Ablesbarkeit behindert. In der Praxis wird dieser Nachteil durch eine Vielzahl möglichst gleichmäßig verteilter Lichtquellen zumindest teilweise ausgeglichen. Nachteilig dabei ist der damit verbundene hohe Aufwand und der erhebliche Platzbedarf.

Ferner erweist sich bei solchen Anzeigeeinheiten als nachteilig, dass schon kleinste Beschädigungen, Unebenheiten oder Verunreinigungen des Lichtleiters für den Betrachter auf dem Zifferblatt sichtbar werden. Verunreinigungen machen eine umständliche Reinigung der Anzeigeeinheit erforderlich. Weiterhin können Fixiermittel des Lichtleiters auf dem Zifferblatt eine Schattenbildung hervorrufen, die ebenfalls ausgeglichen werden muss.

Dem Kurzauszug JP 10214036 der japanischen Patentanmeldung 09015573 und der entsprechenden Vollschrift ist die Anordnung einer Flüssigkristallanzeige mit einem Lichtleiter entnehmbar, welche die Probleme hinsichtlich gleichmäßiger Intensitätsverteilung der Ausleuchtung nicht zu beseitigen vermag.

Der Erfindung liegt das Problem zugrunde, eine Anzeigeeinheit der eingangs genannten Art so zu gestalten, dass das Zifferblatt mit möglichst geringem Aufwand ohne für einen Betrachter sichtbare Helligkeitsdifferenzen beleuchtbar ist.

Dieses Problem wird erfindungsgemäß durch die kennzeichnenden Merkmale des Anspruchs 1 gelöst.

Dadurch wird jeweils ein Teil des in den Lichtleiter eingeleiteten Lichtes an seiner Begrenzungsfläche ausgekoppelt und der restliche Teil des Lichtes innerhalb des Lichtleiters weiter in Richtung des Zifferblattes geleitet. Hierbei tritt an dem der Lichtquelle zugeneigten Abschnitt des Lichtleiters, welcher relativ weit von dem Zifferblatt beabstandet ist, ein relativ großer Teil des Lichtes aus, während mit einem verringerten Abstand zu dem Zifferblatt ein abnehmender Teil des Lichtes austritt. Der Helligkeitseindruck ist dadurch für den Betrachter über die gesamte Fläche des Zifferblattes hinweg ausgeglichen. Insbesondere genügt dabei eine in einen Abschnitt des Lichtleiters einstrahlende Lichtquelle, so dass ein vergleichsweise einfacher Aufbau erreicht werden kann, der zugleich mit geringem Aufwand herstellbar ist. Vereinfacht kann der Lichtleiter einerseits als Lichtleiter, andererseits ähnlich eines schräg gestellten Spiegels als Reflektor aufgefasst werden. Weiterhin bleiben Beschädigungen oder Schmutzpartikel an der Außenseite des Lichtleiters für einen Betrachter weitgehend unsichtbar. Durch die gleichmäßige und helle Lichtabstrahlung sind auch Zifferblätter mit sogenannter Positivdarstellung realisierbar, bei denen dunkle, lichtundurchlässige Ziffern auf dem lichtdurchlässigen, hellen Zifferblatt angeordnet sind, so dass die Beleuchtung einer Zeigerfahne entfallen kann.

Dabei ist eine besonders vorteilhafte Ausführungsform der Erfindung dadurch gegeben, dass der Lichtleiter eine von einem der Lichtquelle zugeneigten Abschnitt zu einem dem Zifferblatt zugeneigten Abschnitt des Lichtleiters abnehmende Querschnittsfläche aufweist. Durch diese im Wesentlichen keilförmige Form des Lichtleiters trifft das in ihn eingeleitete Licht in einem zunehmend steileren Winkel auf die Begrenzungsfläche des Lichtleiters, wodurch die Reflexion vermindert wird und ein zunehmender Anteil des Lichtes aus dem Lichtleiter austritt. Hierdurch lässt sich eine über die gesamte Länge des Lichtleiters gleichmäßig austretende Lichtmenge und somit eine optimale Beleuchtung des Zifferblattes erreichen.

Eine besonders nützliche Weiterbildung der Erfindung ist auch dann gegeben, wenn der Lichtleiter eine als strukturierte Fläche ausgeführte Lichtauskoppelfläche aufweist. Durch eine solche Gestaltung der Außenfläche lässt sich eine gezielte Auskopplung des Lichtes in einem gewünschten Bereich erreichen. Dadurch können auch spezielle Teilbereiche der zu beleuchtenden Fläche optisch hervorgehoben werden. Die strukturierte Fläche kann dabei sowohl an einer dem Zifferblatt zugeneigten als auch an der dem Zifferblatt abgeneigten Außenfläche des Lichtleiters angeordnet sein. Die strukturierte Fläche kann hierzu aus Vertiefungen, beispielsweise Kerben unterschiedlicher Abmessungen, einer rauen Oberfläche, einer aufgedruckten Fläche oder einer Mattierung bestehen. Insbesondere kann die Lichtauskoppelfläche auch aus einer Kombination von unterschiedlich strukturierten Flächen bestehen, um so einen unterschiedlichen Lichtaustritt in verschiedenen Abschnitten des Lichtleiters zu erreichen.

Eine ebenfalls besonders zweckmäßige Weiterbildung der Erfindung wird erreicht, indem der Lichtleiter zumindest eine in seinem Querschnitt verlaufende und eine veränderte Transmission aufweisende Grenzfläche hat. Diese Grenzfläche bewirkt einen verstärkten Lichtaustritt des auftreffenden Lichtes, so dass eine zuverlässig vorherbestimmbare Helligkeit eines jeweiligen Teilbereiches erreicht wird. Solche Grenzflächen können hierzu in unterschiedlichem Abstand voneinander angeordnet sein, der insbesondere in dem der zu beleuchtenden Fläche zugeneigten Bereich geringer ausgeführt sein kann, so dass ein entsprechend zunehmender Anteil des eingeleiteten Lichtes ausgekoppelt wird.

Der Lichtleiter könnte eine Ausnehmung zum Hindurchführen einer Zeigerwelle aufweisen. Eine besonders günstige Ausführungsform der Erfindung ist hingegen auch dadurch gegeben, dass der Lichtleiter in etwa schraubenförmig von einer gegenüber dem Zifferblatt zurückgesetzten Ebene zu der Ebene des Zifferblattes verläuft. Hierdurch lässt sich ein beispielsweise kreisringförmiges Zifferblatt ohne Helligkeitsdifferenzen beleuchten, wobei in dem zentralen Bereich die Zeigerwelle angeordnet ist und dabei die Lichtleitung nicht behindert.

Besonders vorteilhaft ist es auch, wenn der Lichtleiter mit seinem der Lichtquelle abgewandten Abschnitt gegen das Zifferblatt anliegt. Dadurch kann das Licht unmittelbar in das Zifferblatt eingeleitet werden, so dass sich einerseits eine weitere Steigerung der Helligkeit des derart beleuchteten Zifferblattes erreichen lässt. Andererseits kann das Licht zur Beleuchtung weiterer Anzeigen der Anzeigeeinheit weitergeleitet werden.

Eine Ausführungsform der Erfindung ist dadurch besonders sinnvoll, dass die Lichtquelle gemeinsam mit dem der Lichtquelle zugeneigten Abschnitt des Lichtleiters auf einer Leiterplatte angeordnet ist. Hierdurch lässt sich der Montagevorgang erheblich vereinfachen und so zugleich eine platzsparende Gestaltung erreichen. Die Lichtquelle ist hierzu auf der Leiterplatte kontaktiert und strahlt in den Lichtleiter unmittelbar ein.

Dabei ist besonders günstig, wenn der von dem Lichtleiter überspannte Abschnitt der Leiterplatte zur Anordnung weiterer elektrischer Bauteile ausgeführt ist. Dadurch kann der unterhalb des Lichtleiters zur Verfügung stehende Raum optimal genutzt und so die Baugröße der Anzeigeeinheit reduziert werden.

Eine vorteilhafte Weiterbildung der Erfindung ist auch dadurch gegeben, dass der Lichtleiter einen dem Zifferblatt zugeneigten mittleren Abschnitt und zwei dem Zifferblatt abgeneigte Endabschnitte aufweist, in die jeweils eine Lichtquelle einstrahlt. Hierdurch kann zugleich eine leicht zu montierende und stabile Gestaltung des Lichtleiters erreicht und die mittels des Lichtleiters erzielbare Beleuchtungsstärke erhöht werden. Dabei können auch Lichtquellen mit einer unterschiedlichen Farbe verwendet werden, um so beispielsweise einen Teilbereich des Zifferblattes optisch hervorzuheben oder das Erreichen eines kritischen Wertes der Anzeigeeinheit in einer Signalfarbe darzustellen.

Besonders zweckmäßig ist es dabei auch, wenn der Lichtleiter an einer dem Zifferblatt abgewandten Außenfläche mit einem reflektierenden Element versehen ist. Dieses reflektierende Element verhindert das unerwünschte Austreten des Lichtes an einer dem Zifferblatt abgewandten Außenfläche, insbesondere der Unterseite des Lichtleiters, und reduziert dadurch die Verluste. Das reflektierende Element kann hierzu beispielsweise lediglich als eine an der Unterseite des Lichtleiters aufgebrachte, reflektierende Beschichtung oder als ein mit dem Zifferblatt verbundener und den Lichtleiter einschließender Reflektor ausgeführt sein.

Hierbei ist eine besonders vorteilhafte Weiterbildung der Erfindung dadurch gegeben, dass die Lichtquelle eine Leuchtdiode (LED) ist. Dadurch wird eine zugleich energiesparende und problemlos herzustellende Ausführung der Anzeigeeinheit realisiert. Die Leuchtdiode kann hierzu vorzugsweise als ein auf der Leiterplatte oberflächenbestückbares Bauteil (SMD) ausgeführt sein, so dass der Montageprozess weiter vereinfacht werden kann.

Eine die Lichtausbeute vermindernde Lichtumleitung bei der Einkoppelung in den Lichtleiter kann vermieden werden, wenn die Abstrahlrichtung der Lichtquelle nicht senkrecht, sondern in etwa parallel zur Leiterplatte verläuft. Besonders günstig ist es, wenn die Lichtquelle zu einer schräg nach oben gerichteten Abstrahlung des Lichtes ausgeführt ist. Hierdurch kann von der Leuchtdiode ausgehendes Licht unmittelbar in Richtung des zwischen der Ebene des Zifferblattes und der hierzu parallel verlaufenden Leiterplatte schräg angeordneten Lichtleiters einstrahlen. Weitere optische Bauteile zur Umlenkung des Lichtes sind daher nicht erforderlich, so dass keine oder lediglich geringfügige Verluste auftreten. Die Leuchtdiode kann hierzu beispielsweise auch unmittelbar gegen den Lichtleiter anliegen und so eine weiter verbesserte Lichteinkopplung ermöglichen.

Ein andere besonders nützliche Ausführungsform der Erfindung ist auch dadurch gegeben, dass die Anzeigeeinheit zusätzlich zu der ersten Lichtquelle zumindest eine weitere Lichtquelle mit unterschiedlicher Farbe aufweist. Hierdurch ist ein Farbumschlag der mittels des Lichtleiters beleuchteten Fläche darstellbar. Beispielsweise kann dieser beim Erreichen einer bestimmten Zeigerstellung der Anzeigeeinheit erfolgen und dadurch der zugehörige Wert optisch hervorgehoben werden. In gleicher Weise kann der Farbwechsel auch mittels einer mehrfarbigen Leuchtdiode erfolgen, die je nach Ansteuerung Licht mit unterschiedlichem Farbspektrum abstrahlt.

Besonders sinnvoll ist auch eine Weiterbildung der Erfindung, bei der mittels des Lichtleiters zugleich das Zifferblatt und eine in etwa in der Zifferblattebene angeordnete Flüssigkristallanzeige (LCD) beleuchtbar ist. Hierdurch kann eine separate Lichtquelle für die Flüssigkristallanzeige entfallen. Zugleich kann der Freiraum unterhalb des Lichtleiters für eine Steuerung, insbesondere einen Treiber der Flüssigkristallanzeige, genutzt werden.

Die Erfindung lässt verschiedene Ausführungsformen zu. Zur weiteren Verdeutlichung ihres Grundprinzips sind drei davon in der Zeichnung dargestellt und werden nachfolgend beschrieben. Diese zeigt in
- Fig. 1: eine Draufsicht auf eine erfindungsgemäße Anzeigeeinheit mit einem transparenten Zifferblatt und einem Lichtleiter,
- Fig. 2: eine entlang der Linie A-B geschnittene Darstellung der Anzeigeeinheit,
- Fig. 3: eine entlang der Linie C-D geschnittene Darstellung der Anzeigeeinheit,
- Fig. 4: eine Draufsicht auf eine Anzeigeeinheit mit zwei Lichtquellen,
- Fig. 5: eine entlang der Linie E-F geschnittene Darstellung der in Figur 4 gezeigten Anzeigeeinheit,
- Fig. 6: eine Draufsicht auf eine Anzeigeeinheit mit einer Flüssigkristallanzeige (LCD).

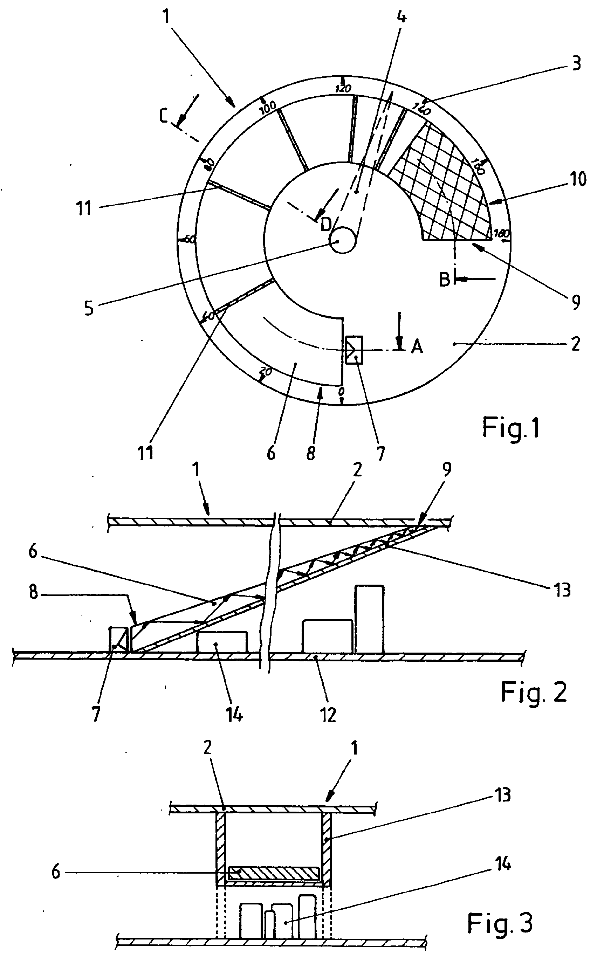

Figur 1 zeigt in einer Draufsicht eine erfindungsgemäße Anzeigeeinheit 1 mit einem im Wesentlichen durchscheinenden Zifferblatt 2, welches außenseitig eine Skalierung 3 trägt. Eine lediglich gestrichelt dargestellte Zeigerfahne 4 der Anzeigeeinheit 1 ist an einer Zeigerwelle 5 schwenkbar angeordnet. Durch das durchscheinende Zifferblatt 2 hindurch ist ein Lichtleiter 6 zu erkennen, welcher in etwa die Gestalt eines 3/4-Kreisringes aufweist. Der Lichtleiter 6 hat einen einer Lichtquelle 7 zugeneigten Abschnitt 8, in den die als Leuchtdiode ausgeführte Lichtquelle 7 unmittelbar einstrahlt. Der Lichtleiter 6 erhebt sich in etwa schraubenförmig aus einer gegenüber dem Zifferblatt 2 zurückgesetzten Ebene der Lichtquelle 7 und liegt mit einem der Lichtquelle 7 abgeneigten Abschnitt 9 von unten gegen das Zifferblatt 2 an. Der Lichtleiter 6 weist eine dem Zifferblatt 2 zugeneigte und als strukturierte Fläche ausgeführte Lichtauskoppelfläche 10 auf, die eine gleichmäßig helle Lichtauskopplung ermöglicht, sowie mehrere im Querschnitt des Lichtleiters 6 verlaufende Grenzflächen 11, die ebenfalls eine gezielte Auskopplung des Lichtes aus dem Lichtleiter 6 begünstigen.

Durch diese Ausführung der Anzeigeeinheit 1 wird eine zugleich gleichmäßig helle und kompakte Bauform erreicht, die zudem mit lediglich einer Lichtquelle 7 auskommt. Helligkeitsdifferenzen sind für einen Betrachter der Anzeigeeinheit 1 nicht erkennbar.

Figur 2 zeigt eine entlang der Linie A-B geschnittene Seitenansicht der Anzeigeeinheit 1. Dargestellt ist der mit einer Leiterplatte 12 verbundene Lichtleiter 6, in dessen Abschnitt 8 die als Leuchtdiode ausgeführte Lichtquelle 7 einstrahlt. Der Lichtleiter 6 erstreckt sich von der Ebene der Leiterplatte 12 schräg nach oben und liegt mit seinem Abschnitt 9 gegen die Unterseite des Zifferblattes 2 an. An seiner dem Zifferblatt 2 abgeneigten Seite ist der Lichtleiter 6 mit einem reflektierenden Element 13 versehen, wodurch eine Auskopplung von Licht an dieser Seite des Lichtleiters 6 verhindert wird. Der Lichtleiter 6 weist eine von seinem ersten Abschnitt 8 zu dem Abschnitt 9 abnehmende Querschnittsfläche auf, so dass das mittels der Lichtquelle 7 eingekoppelte Licht in einem zunehmend steileren Winkel auf die Außenfläche des Lichtleiters 6 bzw. das reflektierende Element 13 auftrifft, wie dies exemplarisch für einen möglichen Strahlengang dargestellt ist. Daher wird ein zunehmender Anteil des Lichtes aus dem Lichtleiter 6 ausgekoppelt. Helligkeitsdifferenzen, bedingt durch die unterschiedlichen Entfernungen, die das jeweils aus dem Lichtleiter 6 ausgekoppelte Licht bis zum Auftreffen auf das Zifferblatt 2 zurücklegt, werden dadurch ausgeglichen. Dabei bleiben Beschädigungen oder Verunreinigungen der Außenfläche des Lichtleiters 6 für einen Betrachter des Zifferblattes 2 unsichtbar. Zugleich kann der von dem Lichtleiter 6 und der Leiterplatte 12 begrenzte Raum für weitere elektronische oder elektrische Bauteile 14 genutzt werden und ermöglicht so eine kompakte Bauform.

Eine entlang der Linie C-D geschnittene Darstellung der Anzeigeeinheit 1 zeigt Figur 3. Zu erkennen ist das als Reflektor-Kanal ausgeführte, reflektierende Element 13, welches gegen das Zifferblatt 2 anliegt und den Lichtleiter 6 einschließt und dabei sowohl Zifferblatt 2 als auch Lichtleiter 6 abstützt. Mögliche Helligkeitsverluste werden dadurch auf ein Minimum begrenzt. Zugleich können unterhalb des reflektierenden Elementes 13 elektrische Bauteile 14 auf der Leiterplatte 12 angeordnet und der zur Verfügung stehende Platz optimal genutzt werden. Dabei ist der Wirkungsgrad so hoch, dass eine einzige als Leuchtdiode ausgeführte Lichtquelle zur Beleuchtung des Zifferblattes 2 ausreicht.

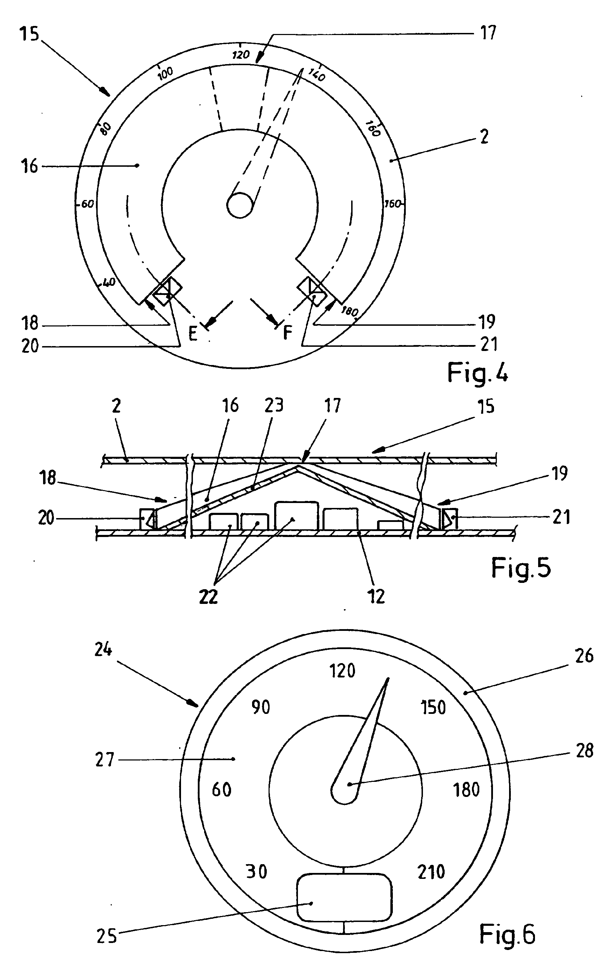

Figur 4 zeigt eine gegenüber Figur 1 abgewandelte Ausführungsform einer Anzeigeeinheit 15 in einer Draufsicht. Dargestellt ist der Lichtleiter 16 der Anzeigeeinheit 15 mit einem mittleren, gegen die Unterseite des Zifferblattes 2 anliegenden Abschnitt 17 und zwei Endabschnitten 18, 19, die gegenüber der Ebene des Zifferblattes 2 zurückgesetzt sind. In die Endabschnitte 18, 19 strahlt jeweils eine als Leuchtdiode ausgeführte Lichtquelle 20, 21 ein, die hierbei beispielsweise auch unterschiedliche Farben aufweisen können, um einen beliebigen Bereich des Zifferblattes 2 optisch hervorzuheben. Die Anzeigeeinheit 15 hat dadurch eine gegenüber der in Figur 1 dargestellten Ausführungsform reduzierte Bauhöhe und ermöglicht so eine besonders platzsparende Anordnung in einer nicht dargestellten Armaturentafel eines Kraftfahrzeuges.

In Figur 5 ist die in Figur 4 gezeigte Anzeigeeinheit 15 entlang der Linie E-F geschnitten dargestellt. Zu erkennen ist die brückenartige Gestaltung des Lichtleiters 16, dessen Endabschnitte 18, 19 auf der Leiterplatte 12 angeordnet sind und in die jeweils eine der beiden Lichtquellen 20, 21 einstrahlt. Der Lichtleiter 16 überspannt dabei mehrere auf der Leiterplatte 12 angeordnete, elektrische Bauteile 22, die ebenfalls auf der lediglich abschnittsweise dargestellten Leiterplatte 12 angeordnet sind. Die Unterseite des Lichtleiters 16 ist mit einem reflektierenden Element 23 versehen, welches die unerwünschte Auskopplung von Licht nach unten verhindert. Der mittlere Abschnitt 17 des Lichtleiters 16 liegt gegen die Unterseite des Zifferblattes 2 an. Der Lichtleiter 16 weist ferner eine zum mittleren Abschnitt 17 hin abnehmende Querschnittsfläche ähnlich der in Figur 2 gezeigten Ausführungsform auf, so dass eine gleichmäßig helle Lichtauskopplung gewährleistet ist. Der Lichtleiter 16 kann ferner auch nicht dargestellte strukturierte oder mattierte Flächen aufweisen.

Eine Draufsicht auf eine Anzeigeeinheit 24 mit einer Flüssigkristallanzeige (LCD) 25 zeigt Figur 6. Ein durch ein Zifferblatt 26 hindurchscheinender Lichtleiter 27 ist hierbei als voller Kreisring erkennbar, so dass das abgestrahlte Licht zugleich zur rückwärtigen Beleuchtung der Flüssigkristallanzeige 25 genutzt werden kann. Aufgrund der gleichmäßig hohen Helligkeit ist es möglich, die Ziffern des Zifferblattes 26 in einer sogenannten Positivdarstellung abzubilden, bei der die Ziffern lichtundurchlässig und dunkel auf dem hellen Zifferblatt 26 angeordnet sind. Eine Zeigerfahne 28 der Anzeigeeinheit 24 ist dabei lichtundurchlässig und unbeleuchtet, wodurch neben einer einfachen Herstellung zugleich auch ein ansprechendes optisches Erscheinungsbild ermöglicht wird.

## Patentansprüche

1. Anzeigeeinheit (1), insbesondere für ein Kraftfahrzeug, mit einem Zifferblatt (2, 26) und einer in einen Lichtleiter (6, 16, 27) einstrahlenden Lichtquelle (7, 20, 21) zur rückwärtigen Beleuchtung eines lichtdurchlässigen Zifferblattes (2, 26), **dadurch gekennzeichnet, dass** der Lichtleiter (6, 16, 27) im Wesentlichen in einer gegenüber dem Zifferblatt (2, 26) geneigten Ebene angeordnet ist wobei der Lichtleiter (6, 16, 27) einen der Lichtquelle (7, 20, 21) zugeneigten Abschnitt der Lichtaustrittsfläche und einen der Lichtquelle (7, 20, 21) abgeneigten Abschnitt der Lichtaustrittsfläche aufweist, welcher abgeneigte Abschnitt einen geringeren Abstand zu dem Zifferblatt (2, 26) aufweist als der zugeneigte Abschnitt, wobei die Lichtquelle (7, 20, 21) in den dem Zifferblatt (2, 26) abgeneigten Abschnitt (8, 18, 19) des Lichtleiters (6, 16, 27) einstrahlt.

2. Anzeigeeinheit nach Anspruch 1, **dadurch gekennzeichnet, dass** der Lichtleiter (6, 16, 27) eine von einem der Lichtquelle (7, 20, 21) zugeneigten Abschnitt (8, 18, 19) zu einem dem Zifferblatt (2, 26) zugeneigten Abschnitt (9, 17) des Lichtleiters (6, 16, 27) abnehmende Querschnittsfläche aufweist.

3. Anzeigeeinheit nach Anspruch 1 oder 2, **dadurch gekennzeichnet, dass** der Lichtleiter (6) eine als strukturierte Fläche ausgeführte Lichtauskoppelfläche (10) aufweist.

4. Anzeigeeinheit nach einem der vorhergehenden Ansprüche, **dadurch gekennzeichnet, dass** der Lichtleiter (6) zumindest eine in seinem Querschnitt verlaufende und eine veränderte Transmission aufweisende Grenzfläche (11) hat.

5. Anzeigeeinheit nach einem der vorhergehenden Ansprüche, **dadurch gekennzeichnet, dass** der Lichtleiter (6, 16, 27) in etwa schraubenförmig von einer gegenüber dem Zifferblatt (2, 26) zurückgesetzten Ebene zu der Ebene des Zifferblattes (2, 26) verläuft.

6. Anzeigeeinheit nach einem der vorhergehenden Ansprüche, **dadurch gekennzeichnet, dass** der Lichtleiter (6, 16, 27) mit seinem der Lichtquelle (7, 20, 21) abgewandten Abschnitt (9, 17) gegen das Zifferblatt (2, 26) anliegt.

7. Anzeigeeinheit nach einem der vorhergehenden Ansprüche, **dadurch gekennzeichnet, dass** die Lichtquelle (7, 20, 21) gemeinsam mit dem der Lichtquelle (7, 20, 21) zugeneigten Abschnitt (9, 17) des Lichtleiters (6, 16, 27) auf einer Leiterplatte (12) angeordnet ist.

8. Anzeigeeinheit nach Anspruch 7, **dadurch gekennzeichnet, dass** der von dem Lichtleiter (6, 16, 27) überspannte Abschnitt der Leiterplatte (12) zur Anordnung weiterer elektrischer Bauteile (14, 22) ausgeführt ist.

9. Anzeigeeinheit nach einem der vorhergehenden Ansprüche, **dadurch gekennzeichnet, dass** der Lichtleiter (16) einen dem Zifferblatt (2) zugeneigten mittleren Abschnitt (17) und zwei dem Zifferblatt (2) abgeneigte Endabschnitte (18, 19) aufweist, in die jeweils eine Lichtquelle (20, 21) einstrahlt.

10. Anzeigeeinheit nach einem der vorhergehenden Ansprüche, **dadurch gekennzeichnet, dass** der Lichtleiter (6, 16, 27) an einer dem Zifferblatt (2, 26) abgewandten Außenfläche mit einem reflektierenden Element (13, 23) versehen ist.

11. Anzeigeeinheit nach einem der vorhergehenden Ansprüche, **dadurch gekennzeichnet, dass** die Lichtquelle (7, 20, 21) eine Leuchtdiode (LED) ist.

12. Anzeigeeinheit nach einem der vorhergehenden Ansprüche, **dadurch gekennzeichnet, dass** die Leuchtdiode (LED) ein auf der Leiterplatte (12) oberflächenbestückbares Bauteil (SMD) ist.

13. Anzeigeeinheit nach einem der vorhergehenden Ansprüche, **dadurch gekennzeichnet, dass** die Lichtquelle (7, 20, 21) zu einer schräg nach oben gerichteten Abstrahlung des Lichtes ausgeführt ist.

14. Anzeigeeinheit nach einem der vorhergehenden Ansprüche, **dadurch gekennzeichnet, dass** die Anzeigeeinheit (15) zusätzlich zu der ersten Lichtquelle (20, 21) zumindest eine weitere Lichtquelle (20, 21) mit unterschiedlicher Farbe aufweist.

15. Anzeigeeinheit nach einem der vorhergehenden Ansprüche, **dadurch gekennzeichnet, dass** mittels des Lichtleiters (27) zugleich das Zifferblatt (2, 26) und eine in etwa in der Zifferblattebene angeordnete Flüssigkristallanzeige (LCD) (25) beleuchtbar ist.

## Claims

1. Display unit (1), in particular for a motor vehicle, having a dial (2, 26) and a light source (7, 20, 21) radiating into an optical conductor (6, 16, 27) for backlighting of a transparent dial (2, 26), **characterized in that** the optical conductor (6, 16, 27) is arranged essentially in a plane inclined with respect to the dial (2, 26), the optical conductor (6, 16, 27) having a section of the light exit surface which is inclined toward the light source (7, 20, 21) and a section of the light exit surface which is inclined away from the light source (7, 20, 21), which inclined-away section is at a shorter distance from the dial (2, 26) than the inclined-toward section, the light source (7, 20, 21) shining into the section (8, 18, 19) of the optical conductor (6, 16, 27) inclined away from the dial (2, 26).

2. Display unit according to Claim 1, **characterized in that** the optical conductor (6, 16, 27) has a cross-sectional surface decreasing from a section (8, 18, 19) of the optical conductor (6, 16, 27) inclined toward the light source (7, 20, 21) to a section (9, 17) of the optical conductor (6, 16, 27) inclined toward the dial (2, 26).

3. Display unit according to Claim 1 or 2, **characterized in that** the optical conductor (6) has a light outcoupling surface (10) designed as a structured surface.

4. Display unit according to one of the preceding claims, **characterized in that** the optical conductor (6) has at least one boundary surface (11) which runs in its cross section and has an altered transmission.

5. Display unit according to one of the preceding claims, **characterized in that** the optical conductor (6, 16, 27) runs approximately helically from a plane set back from the dial (2, 26) to the plane of the dial (2, 26).

6. Display unit according to one of the preceding claims, **characterized in that** the optical conductor (6, 16, 27) bears against the dial (2, 26) with its section (9, 17) averted from the light source (7, 20, 21).

7. Display unit according to one of the preceding claims, **characterized in that** the light source (7, 20, 21) is arranged on a printed circuit board (12) together with the section (9, 17) of the optical conductor (6, 16, 27) inclined toward the light source (7, 20, 21).

8. Display unit according to Claim 7, **characterized in that** the section of the printed circuit board (12) spanned by the optical conductor (6, 16, 27) is designed for the arrangement of further electric components (14, 22).

9. Display unit according to one of the preceding claims, **characterized in that** the optical conductor (16) has a middle section (17) inclined toward the dial (2) and two end sections (18, 19) inclined away from the dial (2) into which one light source (20, 21) shines in each case.

10. Display unit according to one of the preceding claims, **characterized in that** the optical conductor (6, 16, 27) is provided with a reflecting element (13, 23) on an outer surface averted from the dial (2, 26).

11. Display unit according to one of the preceding claims, **characterized in that** the light source (7, 20, 21) is a light-emitting diode (LED).

12. Display unit according to one of the preceding claims, **characterized in that** the light-emitting diode (LED) is a component (SMD) which can be surface-mounted on the printed circuit board (12).

13. Display unit according to one of the preceding claims, **characterized in that** the light source (7, 20, 21) is designed for emitting the light in a fashion directed obliquely upward.

14. Display unit according to one of the preceding claims, **characterized in that** in addition to the first light source (20, 21) Display unit (15) has at least one further light source (20, 21) of different colour.

15. Display unit according to one of the preceding claims, **characterized in that** the dial (2, 26) and a liquid crystal display (LCD) (25) arranged approximately in the plane of the dial can be lit simultaneously by means of the optical conductor (27).

## Revendications

1. Unité d'affichage (1), prévue notamment pour un véhicule automobile, comportant un cadran (2, 26) et une source de lumière (7, 20, 21) rayonnant dans un guide d'ondes optiques (6, 16, 27) et destinée notamment à l'éclairage d'arrière-plan d'un cadran transparent (2, 26), **caractérisée en ce que** le guide d'ondes optiques (6, 16, 27) est disposé, pour l'essentiel, dans un plan oblique par rapport au cadran (2, 26), où le guide d'ondes optiques (6, 16, 27) comporte une section de la surface de sortie de la lumière tournée vers la source de lumière (7, 20, 21) et une section de la surface de sortie de la lumière tournée à l'opposé de la source de lumière (7, 20, 21), cette section tournée à l'opposé de la source de lumière étant à une distance inférieure du cadran (2, 26) que la section tournée vers la source de lumière, la source de lumière (7, 20, 21) rayonnant dans la section (8, 18, 19) du guide d'ondes optiques (6, 16, 27) tournée à l'opposé du cadran (2, 26).

2. Unité d'affichage selon la revendication 1 **caractérisée en ce que** le guide d'ondes optiques (6, 16, 27) a une section transversale qui diminue en partant d'une section (8, 18, 19) tournée vers la source de lumière (7, 20, 21) vers une section (9, 17) tournée vers la cadran (2, 26).

3. Unité d'affichage selon la revendication 1 ou 2 **caractérisée en ce que** le guide d'ondes optiques (6) a une surface (10) de découplage de la lumière exécutée sous la forme de surface structurée.

4. Unité d'affichage selon l'une des revendications précédentes **caractérisée en ce que** le guide d'ondes optiques (6) a au moins une surface limitrophe (11) s'étendant sur sa section transversale et ayant un pouvoir de transmission modifié.

5. Unité d'affichage selon l'une des revendications précédentes **caractérisée en ce que** le guide d'ondes optiques (6, 16, 27) se développe, avec une forme approximativement hélicoïdale, d'un plan décalé vers l'arrière par rapport au cadran (2, 26) vers le plan du cadran (2, 26).

6. Unité d'affichage selon l'une des revendications précédentes **caractérisée en ce que** le guide d'ondes optiques (6, 16, 27) s'applique, par sa section (9, 17) opposée à la source de lumière (7, 20, 21), contre l'écran (2, 26).

7. Unité d'affichage selon l'une des revendications précédentes **caractérisée en ce que** la source de lumière (7, 20, 21) est disposée, en commun avec la section (9, 17) du guide d'ondes optiques (6, 16, 27) tournée vers la source de lumière (7, 20, 21), sur une carte à circuits imprimés (12).

8. Unité d'affichage selon la revendication 7 **caractérisée en ce que** la partie de la carte à circuits imprimés (12) qui se trouve sous le guide d'ondes optiques (6, 16, 27) est conçue pour y disposer d'autres composants électriques (14, 22).

9. Unité d'affichage selon l'une des revendications précédentes **caractérisée en ce que** le guide d'ondes optiques (16) comporte une section centrale (17) tournée vers le cadran (2) et deux sections terminales (18, 19) tournées à l'opposé du cadran (2), dans chacune desquelles rayonne une source de lumière (20, 21).

10. Unité d'affichage selon l'une des revendications précédentes **caractérisée en ce que** le guide d'ondes optiques (6, 16, 27) est muni, sur une surface extérieure opposée au cadran (2, 26), d'un élément réfléchissant (13, 23).

11. Unité d'affichage selon l'une des revendications précédentes **caractérisée en ce que** la source de lumière (7, 20, 21) est une diode électroluminescente (LED).

12. Unité d'affichage selon l'une des revendications précédentes **caractérisée en ce que** la diode électroluminescente (LED) est un composant (SMD) pouvant être monté en surface sur la carte à circuits imprimés (12).

13. Unité d'affichage selon l'une des revendications précédentes **caractérisée en ce que** la source de lumière (7, 20, 21) est conçue pour un rayonnement de la lumière dirigé en biais vers le haut.

14. Unité d'affichage selon l'une des revendications précédentes **caractérisée en ce que** l'unité d'affichage (15) comporte, en plus de la première source de lumière (20, 21), au moins une autre source de lumière (20, 21) ayant une couleur différente.

15. Unité d'affichage selon l'une des revendications précédentes **caractérisée en ce qu'**il est possible d'éclairer, au moyen du guide d'ondes optiques (27), en même temps le cadran (2, 26) et un affichage à cristaux liquides (LCD) (25) monté approximativement dans le plan du cadran.
